# EUROPÄISCHE PATENTSCHRIFT

(11) **EP 3 805 596 B1**
(45) Veröffentlichungstag und Bekanntmachung des Hinweises auf die Patenterteilung: **16.04.2025**
(21) Anmeldenummer: 20192407.3
(22) Anmeldetag: 24.08.2020
(51) Int. Cl.: F16F 9/32

(54) **VERFAHREN ZUR HERSTELLUNG EINES HYDRAULISCHEN DÄMPFERS UND HYDRAULISCHER DÄMPFER**
METHOD FOR PRODUCING A HYDRAULIC SHOCK ABSORBER AND HYDRAULIC SHOCK ABSORBER
PROCÉDÉ DE FABRICATION D'UN AMORTISSEUR HYDRAULIQUE ET AMORTISSEUR HYDRAULIQUE

(30) Priorität: 08.10.2019 DE 102019215382
(43) Veröffentlichungstag der Anmeldung: 14.04.2021
(73) Patentinhaber: Grass GmbH, 64354 Reinheim (DE)
(72) Erfinder: Herper, Markus, 64367 Mühltal (DE)
(74) Vertreter: Patentanwälte Magenbauer & Kollegen Partnerschaft mbB

(56) Entgegenhaltungen:
- WO-A1-2018/153542
- DE-A1- 10 038 971
- DE-A1- 10 312 164

## Beschreibung

Die Erfindung betrifft ein Verfahren zur Herstellung eines hydraulischen Dämpfers und einen hydraulischen Dämpfer. Der hydraulische Dämpfer weist ein Dämpfergehäuse und einem Dämpfergehäuse aufgenommenen mit einer Kolbenstange verbundenen Dämpferkolben auf, wobei der Dämpferkolben einen Kolbenkörper aufweist, der axial von wenigstens einem Überströmloch durchsetzt ist, über den beim Dämpfungsvorgang Dämpfungsflüssigkeit überströmen kann.

Derartige hydraulische Dämpfer sind bereits seit langem bekannt und werden in einer Vielzahl technischer Gebiete eingesetzt. Ein solches technisches Gebiet ist die Möbelindustrie, bei der solche hydraulische Dämpfer eingesetzt werden, um harte Anschläge von bewegbaren Möbelteilen, beispielsweise Klappen, Schubladen usw. bei deren Bewegung zwischen der Öffnungs- und der Schließstellung zu vermeiden.

Derartige hydraulische Dämpfer aus der Möbelindustrie sind in der Regel klein dimensioniert, um platzsparend an der zugeordneten Möbelkomponente untergebracht werden zu können. Die relativ geringe Baugröße solcher hydraulischer Dämpfer führt natürlich dazu, dass auch der Dämpferkolben relativ klein dimensioniert ist. Insbesondere ist das den Kolbenkörper des Dämpferkolbens axial durchsetzende Überströmloch relativ klein dimensioniert, das heißt weist ein relativ kleinen Durchmesser auf.

Die Dämpfungskraft des hydraulischen Dämpfers ist maßgeblich abhängig vom Durchmesser des Überströmlochs. Bei Überströmlöchern mit derartig kleinen Durchmessern, die oftmals im Zehntelmillimeter-Bereich liegen, ist es bei der Herstellung schwierig, die erforderlichen Toleranzen einzuhalten. Stand der Technik ist, dass Überströmlöcher bei Kolbenkörpern aus Kunststoff bei der Herstellung der Kolbenkörper durch Kunststoffspritzgießen gleich mit ausgebildet werden. Das Einhalten der erforderlichen Toleranzen bei Überströmlöchern, die nur einige Zehntelmillimeter im Durchmesser groß sind, ist beim Kunststoffspritzgießen schwer beziehungsweise nahezu unmöglich.

Das Dokument WO2018/153542A1 offenbart einen bekannten hydraulischen Dämpfer.

Aufgabe der Erfindung ist es daher, ein Verfahren zur Herstellung eines hydraulischen Dämpfers und einen hydraulischen Dämpfer bereitzustellen, mit dem hydraulische Dämpfer mit einer bestimmten Dämpfungskraft zuverlässig ohne großen Ausschuss hergestellt werden können.

Das erfindungsgemäße Verfahren zur Herstellung eines hydraulischen Dämpfers zeichnet sich dadurch aus, dass das Überströmloch durch Bestrahlen des Kolbenkörpers mittels eines Laserstrahls eingebracht wird.

Mittels Bearbeitung durch einen Laserstrahl hergestellte Überströmlöcher haben eine hohe Genauigkeit, wodurch große Toleranzen, wie sie beispielsweise beim Kunststoffspritzgießen vorkommen, vermieden werden können. Die Bearbeitung mittels Laserstrahls kann durch Laserstrahlschneiden beziehungsweise Laserschneiden beziehungsweise Laserbrennschneiden erfolgen.

Bei einer Weiterbildung der Erfindung handelt es sich bei dem Kolbenkörper um ein Kunststoff-Bauteil. In diesem Fall wird der Kolbenkörper zweckmäßigerweise mittels Kunststoffspritzgießen hergestellt, während das Überströmloch mittels eines Laserstrahls eingebracht wird. Auch für Kunststoffe eignet sich das Laserstrahlschneiden.

Erfindungsgemäß weist der Kolbenkörper einen Kolbenstangen-Kanal auf, in dem die Kolbenstange aufgenommen ist.

Erfindungsgemäß wird der Kolbenstangen-Kanal durch Bestrahlen des Kolbenkörpers mittels eines Laserstrahls eingebracht.

Bei einer Weiterbildung des erfindungsgemäßen Verfahrens wird das Überströmloch nach dessen Herstellung vermessen. Insbesondere wird dabei der Kanaldurchmesser des Überströmlochs gemessen. Es ist jedoch auch denkbar, andere geometrische Parameter des Überströmlochs zu messen, beispielsweise die Länge des Überströmlochs oder die Rundheit des Überströmlochs.

Bei einer Weiterbildung des erfindungsgemäßen Verfahrens wird der Dämpferkolben nach dem Vermessen des Überströmlochs in Abhängigkeit des Messergebnisses nach Chargen sortiert. Vorzugsweise wird in Abhängigkeit des gemessenen Ist-Werts des Lochdurchmessers nach Chargen sortiert. Alternativ oder zusätzlich ist es möglich, dass bei zu großer Abweichung des Messergebnisses von einen Soll-Wert insbesondere des Ist-Werts des Lochdurchmessers vom Soll-Wert des Lochdurchmessers eine Nachbearbeitung des Überströmloches insbesondere mittels Bestrahlen durch Laser stattfindet. Es ist beispielsweise möglich, den Chargen bestimmte Toleranzen des Messergebnisses zuzuordnen. So ist es beispielsweise möglich, dass in eine Charge alle Dämpferkolben sortiert werden, deren Messergebnis vom Vermessen des Überströmlochs im Wesentlichen keine Abweichung von einem Soll-Wert haben. In andere Chargen können dann beispielsweise Teile einsortiert werden, deren Abweichung des gemessenen Ist-Werts vom geforderten Soll-Wert innerhalb einer Maximaltoleranz nach oben oder in einer anderen Charge nach unten liegen und in einer weiteren Charge können beispielsweise dann alle Teile einsortiert werden, die die Maximaltoleranz überschreiten und in der daher Ausschuss sind oder zur Nachbearbeitung überführt werden.

Bei einer Weiterbildung des erfindungsgemäßen Verfahrens wird zur Durchführung des Verfahrens eine Bearbeitungseinrichtung mit mehreren Bearbeitungsstationen verwendet, wobei von den Bearbeitungsstationen eine Zuführstation zur Zuführung von unbearbeiteten Kolben-Rohlingen, eine Laserstation zur Herstellung des Überströmlochs, eine Messstation zur Vermessung des hergestellten Überströmlochs und eine Ausschleusstation zur Ausschleusung der vermessenen Dämpferkolben vorgesehen sind.

In besonders bevorzugter Weise weist die Bearbeitungseinrichtung eine Fördereinrichtung auf, die zum Transport der Dämpferkolben zwischen den Bearbeitungsstationen verwendet wird.

Bei der Fördereinrichtung kann es sich beispielsweise um einen allen Bearbeitungsstationen zugeordneten Drehteller handeln, der die darauf befindlichen Dämpferkolben taktweise zwischen Bearbeitungsstationen bewegt.

Die Erfindung betrifft ferner einen hydraulischen Dämpfer mit den Merkmalen des unabhängigen Anspruchs 8.

Der erfindungsgemäße hydraulische Dämpfer zeichnet sich dadurch aus, dass das Überströmloch durch Bestrahlen des Kolbenkörpers mittels eines Laserstrahls ausgebildet ist.

Erfindungsgemäß weist das Überströmloch zwei zueinander entgegengesetzt angeordnete Mündungsabschnitte auf, die über einen Zentralabschnitt miteinander verbunden sind, wobei die Mündungsabschnitte gegenüber dem Zentralabschnitt trichterförmig erweitert sind. Das Überströmloch kann daher einen konischen Verlauf aufweisen.

Die Erfindung umfasst ferner eine Bewegungsvorrichtung zum Öffnen und Schließen eines bewegbaren Möbelteils, insbesondere Schublade, Tür oder Klappe gekennzeichnet durch wenigstens einen hydraulischen Dämpfer gemäß Anspruch 8.

Bei einer Weiterbildung der Bewegungsvorrichtung ist diese als Beschlag, insbesondere Klappenbeschlag, ausgebildet, mit einer Hebeleinrichtung, mit mehreren gelenkig miteinander verbundenen Hebeln, die einerseits schwenkbeweglich am Möbel und andererseits schwenkbeweglich an einem bewegbaren Möbelteil gelagert sind, wobei vorzugsweise der hydraulische Dämpfer an einer zum Beschlag gehörenden Montageplatte angeordnet ist, die ihrerseits am Möbel befestigbar ist.

Alternativ hierzu ist es möglich, dass die Bewegungsvorrichtung als Scharnier ausgebildet ist, mit einem einem Möbel zugeordneten ersten Scharnierteil, insbesondere in Form eines Scharnierarms, und einem einem bewegbaren Möbelteil, beispielsweise Tür, zugeordneten zweiten Scharnierteil, insbesondere in Form eines Scharniertopfes, wobei vorzugsweise der hydraulische Dämpfer am möbelseitigen ersten Scharnierteil angeordnet ist.

Ein bevorzugtes Ausführungsbeispiel der Erfindung ist in der Zeichnung dargestellt und wird im Folgenden näher erläutert. In der Zeichnung zeigen:
- Figur 1: eine schematische Darstellung eines bevorzugten Ausführungsbeispiels einer Bearbeitungseinrichtung zur Durchführung des erfindungsgemäßen Verfahrens zur Herstellung eines hydraulischen Dämpfers,
- Figur 2: einen Längsschnitt durch einen Teil eines durch das erfindungsgemäße Verfahren hergestellten hydraulischen Dämpfers,
- Figur 3: eine Grafik zur Kraftmessung verschiedener Dämpfer bei konstanter Temperatur und konstanter Geschwindigkeit über den zurückgelegten Weg,
- Figur 4: ein Diagramm bei der die Kraft verschiedener Dämpfer über dem Durchmesser aufgetragen ist und
- Figur 5: eine Weiterbildung des Diagramms von Figur 4 in dem die verschiedenen Kraft/Durchmesser-Koordinaten der verschiedenen Dämpfer mittels einer Kurve verbunden sind.

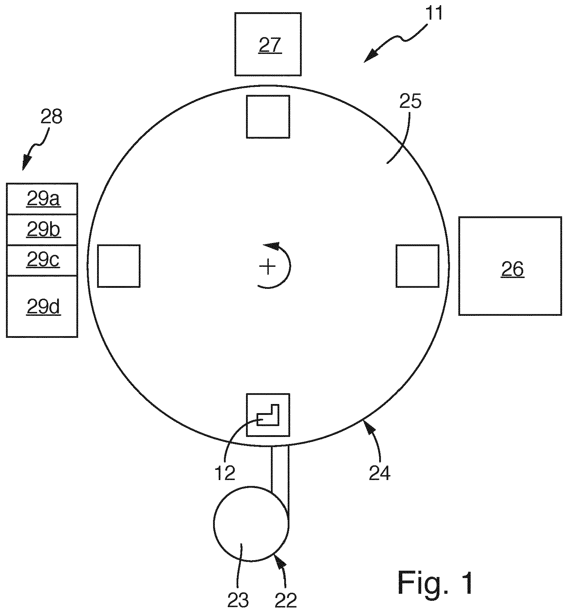

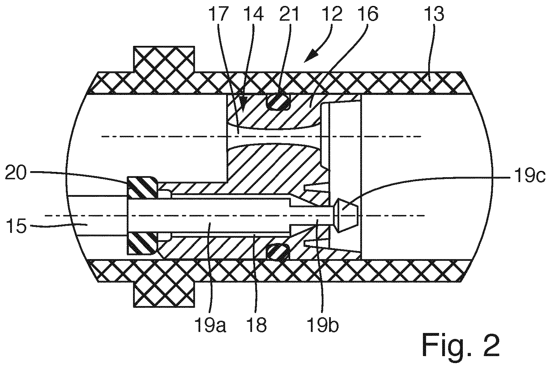

Figur 1 zeigt ein bevorzugtes Ausführungsbeispiel einer Bearbeitungseinrichtung 11, in der das erfindungsgemäße Verfahren zur Herstellung eines hydraulischen Dämpfers 12 (Figur 2) durchgeführt werden kann. Solche hydraulischen Dämpfer 12 haben unzählige Anwendungsgebiete, jedoch soll hier der erfindungsgemäße hydraulische Dämpfer 12 beispielhaft beim Einsatz in einer Bewegungsvorrichtung für ein Möbel beschrieben werden.

Wie beispielhaft in Figur 2 gezeigt, umfasst ein derartiger hydraulischer Dämpfer 12 ein Dämpfergehäuse 13, in dem ein Dämpferkolben 14 aufgenommen ist. Der Dämpferkolben 14 ist mit einer Kolbenstange 15 verbunden, die über eine Öffnung (nicht dargestellt) aus dem Dämpfergehäuse 13 herausgeführt ist.

Es ist möglich, dass Kolbenstange 15 und Dämpferkolben 14 beweglich gelagert sind, während das Dämpfergehäuse 13 ortsfest angeordnet ist. In diesem Fall ist also der Dämpferkolben 14 im Dämpfergehäuse 13 beweglich geführt. Alternativ ist es jedoch auch möglich, dass Dämpferkolben 14 und Kolbenstange 15 stationär sind und das Dämpfergehäuse 13 beweglich geführt ist.

Der Dämpferkolben 14 weist einen Kolbenkörper 16 auf, der axial von wenigstens einem Überströmloch 17 durchsetzt ist, über den beim Dämpfungsvorgang Dämpfungsflüssigkeit überströmen kann.

Als Dämpfungsflüssigkeit wird bevorzugt Hydrauliköl eingesetzt.

Zweckmäßigerweise handelt es sich bei dem hydraulischen Dämpfer 12 um ein Kunststoff-Bauteil. Zweckmäßigerweise sind die Hauptkomponenten des hydraulischen Dämpfers, also das Dämpfergehäuse 13 und der Dämpferkolben 14 mit dem Kolbenkörper 16 Kunststoff-Bauteile, die insbesondere mittels Kunststoffspritzgießen hergestellt sind.

Wie insbesondere in Figur 2 gezeigt, besitzt der Kolbenkörper 16 des Dämpferkolbens 14 einen vorzugsweise im wesentlichen parallel zum Überströmloch 17 angeordneten Kolbenstangen-Kanal 18. Wie beispielhaft in Figur 2 gezeigt, wird der Kolbenstangen-Kanal 18 von der Kolbenstange 15 durchsetzt. Beispielhaft besitzt die Kolbenstange 15 mehrere Kolbenstangenabschnitte 19a, 19b, 19c mit unterschiedlichen Durchmessern, wobei insbesondere ein am freien Ende befindlicher Kolbenstangenabschnitt 19c einen gegenüber dem Durchmesser des Kolbenstangen-Kanals größeren Durchmesser besitzt, wodurch die Kolbenstange in die eine Richtung axial unverschiebbar am Kolbenkörper 16 gelagert ist. Eine Stufe zwischen dem ersten und zweiten Kolbenstangenabschnitt 19a, 19b sorgt für die Sicherung in der anderen Richtung.

Der Übergang zwischen der Innenseite des Kolbenstangen-Kanals 18 und der Außenseite der Kolbenstange 15 ist mittels einer Ringdichtung 20 abgedichtet, die auf der Kolbenstange 15 sitzt.

Der Übergang zwischen der Außenseite des Kolbenkörpers 16 und der Innenwandung des Dämpfergehäuses 13 wird ebenfalls mittels einer Ringdichtung 21, im Beispielsfall mittels eines Ringschnur-Dichtrings, abgedichtet.

Die vorstehend bereits erwähnte Bearbeitungseinrichtung 11 die zur Herstellung hydraulischen Dämpfers 12 verwendet wird, umfasst mehrere Bearbeitungsstationen, von denen eine eine Zuführstation 22 zur Zuführung von unbearbeiteten Kolben-Rohling ist. Die Zuführstation 22 umfasst beispielhaft einen Fördertopf 23, in dem die Kolben-Rohlinge bevorratet sind und dann zu einer ebenfalls zur Bearbeitungseinrichtung 11 gehörenden Fördereinrichtung 24 befördert werden. Die Fördereinrichtung 24 umfasst im Beispielsfall einen Drehteller 25.

Als weitere Bearbeitungsstation ist eine Laserstation 26 zur Herstellung des Überströmlochs 17 im jeweiligen Kolbenkörper 16 des Dämpferkolbens 14 vorgesehen. An die Laserstation 26 schließt sich in Bearbeitungsrichtung eine Messstation 27 an, die zur Vermessung des hergestellten Überströmlochs 17 dient.

Als letzte der Bearbeitungsstationen ist eine Ausschleusstation 28 vorgesehen, an der die fertig hergestellten Dämpferkolben ausgeschleust werden.

Die Ausschleusstation 28 umfasst im Beispielsfall mehrere Auffangbehälter 29a-d, in die Kolbenkörper 16 in Abhängigkeit des Messergebnisses bei der Vermessung des jeweiligen Überströmlochs 17 einsortiert werden.

Der Drehteller 25 ist also jeder der Bearbeitungsstationen zugeordnet, wobei darauf befindliche Dämpferkolben 14 taktweise zwischen den Bearbeitungsstationen bewegt werden.

Das erfindungsgemäße Verfahren zur Herstellung von hydraulischen Dämpfern 12 läuft folgendermaßen ab:
Die Komponenten Dämpfergehäuse 13 und Dämpferkolben 14 werden zunächst mittels Kunststoffspritzgießen hergestellt. Die unbearbeitete Kolben-Rohlinge, also insbesondere der Kolbenkörper 16 des Dämpferkolbens 14 werden in dem Fördertopf 23 bevorratet. Über den Fördertopf 23 werden die unbearbeiteten Kolben-Rohlinge in den Drehteller 25 eingeschleust. Beim nächsten Takt gelangen die eingeschleusten Kolben-Rohlinge zur Laserstation 26.

In der Laserstation 26 werden die Überströmlöcher 17 durch Bestrahlen des Kolbenkörpers 16 mittels eines Laserstrahls eingebracht. Es ist möglich, dass mehrere Überströmlöcher 17 an unterschiedlichen Kolbenkörpern 16 gleichzeitig durch mehrere Laserstrahlen eingebracht werden. Es ist jedoch auch möglich, mit nur einem einzelnen Laserstrahl zu arbeiten, der dann nacheinander die Überströmlöcher 17 in die Kolben-Rohlinge einbringt.

Es ist möglich, dass die Kolbenstangen-Kanäle 18 bereits bei der Herstellung der Kolben-Rohlinge mittels Kunststoffspritzgießen mit eingebracht werden. Alternativ ist es jedoch auch möglich, zusätzlich zum Überströmloch 17 den Kolbenstangen-Kanal 18 mittels Bestrahlen durch Laser herzustellen. Die Bearbeitung der Kolben-Rohlinge mittels Bestrahlen durch Laser kann durch Laserstrahlschneiden insbesondere Laserbrennschneiden erfolgen.

Der Vorteil der Einbringung des Überströmlochs 17 mittels Laser gegenüber herkömmlichen bei der Herstellung mittels Kunststoffspritzgießen mit ausgebildeten Überströmlöchern 17 ist die deutlich höhere Genauigkeit. Es wird daher insbesondere bei hydraulischen Dämpfern mit relativ geringer Dämpfkraft die Ausschussrate deutlich reduziert. Zum Beispiel wäre für einen Dämpfer mit einer Dämpfkraft von 30N ein Überströmloch mit einem Durchmesser von 0,18mm notwendig, um die erforderliche Dämpfungskraft für die 30N exakt bereitzustellen. Die maximale Toleranz, die hierzu erlaubt ist, wäre +/- 2N, was einer maximalen Toleranz bei 0,18mm von +/- 0,005mm entspricht. Dies ist spritztechnisch unmöglich, da hier die Toleranzen bei ca. +/- 0,02mm liegen.

Nach dem Einbringen des Überströmlochs 17 mittels Bestrahlen durch Laser wird der Drehteller 25 weiter getaktet und der mit dem Überströmloch 17 versehene Kolbenkörper 16 gelangt zur Messstation 27.

In der Messstation 27 wird das Überströmloch 17 vermessen. Dabei wird insbesondere der Ist-Wert des Durchmessers des Überströmlochs 17 gemessen. Der gemessene Ist-Wert des Durchmessers des Überströmlochs 17 wird mit einem hinterlegten Soll-Wert des Durchmessers verglichen. Zweckmäßigerweise erfolgt dies mittels einer ebenfalls zur Bearbeitungseinrichtung 11 gehörenden Steuereinrichtung, in der die erforderlichen Soll-Werte in Abhängigkeit von der Dämpferkraft abgespeichert sind.

Nach der Vermessung des Überströmlochs 17 wird der Drehteller 25 weiter getaktet und der Kolbenkörper 16 mit dem vermessenen Überströmloch 17 gelangt zur Ausschleusstation 28. An der Ausschleusstation 28 wird der mit dem Überströmloch 17 ausgestattete Kolbenkörper 16 in eine der Auffangbehälter 29a-d einsortiert. Die Einsortierung erfolgt beispielhaft nach folgenden Kriterien:
In den ersten Auffangbehälter 29a werden Kolbenkörper 16 einsortiert, die nur minimalste Abweichungen des Ist-Werts des Durchmessers des Überströmlochs vom geforderten Soll-Wert aufweisen. In den zweiten Auffangbehälter 29b werden solche Kolbenkörper einsortiert, deren Ist-Wert des Durchmessers des Überströmlochs 17größer ist, als der geforderte Soll-Wert, jedoch eine maximale Toleranz nach oben nicht überschreitet. In den dritten Auffangbehälter 29c werden solche Kolbenkörper einsortiert, deren Ist-Wert kleiner ist als der geforderte Soll-Wert, jedoch auch eine maximale Toleranz nach unten nicht unterschreiten. In den vierten Auffangbehälter 29d werden solche Kolbenkörper einsortiert, deren Ist-Wert des gemessenen Durchmessers des Überströmlochs 17 die maximal zulässige Toleranz nach unten oder oben überschreitet. Diejenigen Kolbenkörper, deren Ist-Wert die maximal zulässige Toleranz nach unten unterschreiten, das heißt diejenigen deren Überströmlöcher deutlich zu klein ausgebildet wurden, können einer anschließenden Nachbearbeitung in der Laserstation 22 oder in einer anderen Nachbearbeitungsstation zugeführt werden. Diejenigen Kolbenkörper, deren Ist-Wert des Durchmessers des Überströmlochs 17 deutlich zu groß sind, sind Ausschussware.

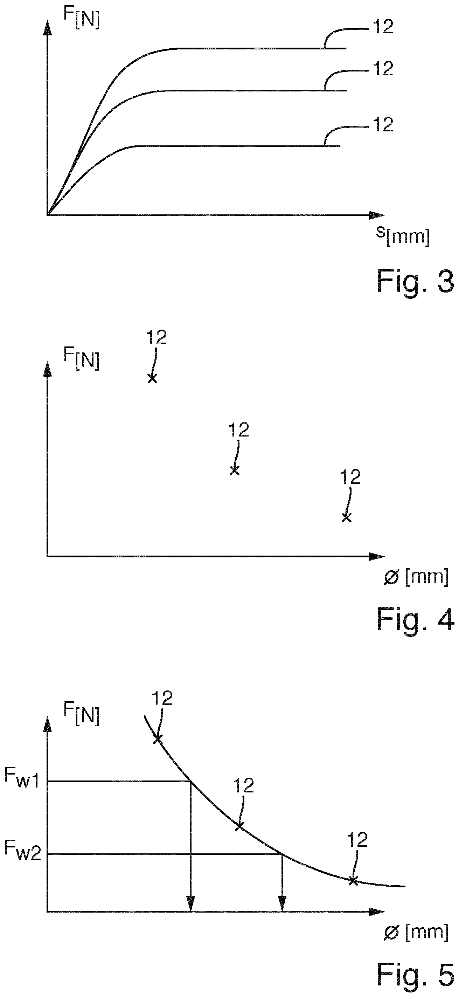

Die Figuren 3 bis 5 zeigen eine Vorgehensweise zur Bestimmung des für eine bestimmte Dämpfkraft eines hydraulischen Dämpfers 12 erforderlichen Durchmessers des Überströmlochs 17.

Hierzu werden zunächst die Dämpferkolben 14 im Dämpfer verbaut. Danach wird eine Kraftmessung der hydraulischen Dämpfer 12 bei vorgeschriebener Geschwindigkeit und Temperatur durchgeführt. Es wird bei einer konstanten Geschwindigkeit sowie einer konstanten Temperatur gemessen. Gemessen wird bei festgelegtem Durchmesser beziehungsweise festgelegtem Durchflussquerschnitt.

Das Schaubild in Figur 3 zeigt ein Kraft-Weg-Diagramm, worin die Kraft/Weg-Kurven verschiedener hydraulischer Dämpfer 12 mit einem exakt zugeordneten Durchmesser des Überströmlochs gezeigt sind. Je größer der Durchmesser des Überströmlochs 17, desto höher die gemessene Dämpferkraft des hydraulischen Dämpfers. Man erkennt im Schaubild der Figur 3, dass der Dämpferkolben mit dem größten Durchflussquerschnitt die höchste Kraft aufbringen kann, wobei diese Maximalkraft jedoch nach einem gegenüber Kolben mit geringeren Durchflussquerschnitten größeren Weg erreicht wird.

Die Figur 4 zeigt ein Schaubild, in denen die zuvor über die Kraftmessung (siehe Schaubild der Figur 3) gemessenen Dämpferkräfte über dem Durchmesser aufgetragen sind.

Das Schaubild aus Figur 5 zeigt eine Kraft/Durchmesser-Kurve. Aus dieser Kurve lässt sich dann ein erforderlicher Durchflussquerschnitt, also ein erforderlicher Durchmesser des Überströmlochs bei einer bestimmten vorgegebenen Kraft ablesen.

Für die mittels des erfindungsgemäßen Verfahrens hergestellten hydraulischen Dämpfer 12 gibt es bereits im Möbelbereich unzählige Anwendungsgebiete. Es ist beispielsweise möglich, den hydraulischen Dämpfer in einer Bewegungsvorrichtung in Form eines Beschlags einzusetzen. Bei einer in den Figuren nicht gezeigten Anwendungsvariante ist ein Klappenbeschlag vorgesehen, der eine Hebeleinrichtung mit mehreren Gelenken miteinander verbundenen Hebeln aufweist. Die Hebel sind einerseits schwenkbeweglich an einem Möbel und andererseits schwenkbeweglich an einem bewegbaren Möbelteil in Form einer Klappe gelagert. In diesem Fall kann der hydraulische Dämpfer 12 an einer zum Beschlag gehörenden Montageplatte angeordnet sein, die ihrerseits am Möbel befestigbar ist.

Bei einer Alternative ist die Bewegungsvorrichtung als Scharnier ausgebildet. Das Scharnier weist ein einem Möbel zugeordnetes erstes Scharnierteil, insbesondere in Form eines Scharnierarms, und einem einem bewegbaren Möbelteil, beispielsweise Tür, zugeordnetes zweites Scharnierteil, insbesondere in Form eines Scharniertopfes auf. Bei diesem Anwendungsfall kann der hydraulische Dämpfer 12 am möbelseitigen ersten Scharnierteil angeordnet sein.

## Patentansprüche

1. Verfahren zur Herstellung eines hydraulischen Dämpfers (12), der ein Dämpfergehäuse (13) und ein im Dämpfergehäuse (13) aufgenommenen mit einer Kolbenstange (15) verbunden Dämpferkolben (14) aufweist, wobei der Dämpferkolben (14) einen Kolbenkörper (16) aufweist, der axial von wenigstens einem Überströmloch (17) durchsetzt ist, über das beim Dämpfungsvorgang Dämpfungsflüssigkeit überströmen kann, das Überströmloch (17) durch Bestrahlen des Kolbenkörpers (16) mittels eines Laserstrahls eingebracht wird, wobei der Kolbenkörper (16) einen Kolbenstangen-Kanal (18) aufweist, in dem die Kolbenstange (15) aufgenommen ist, **dadurch gekennzeichnet, dass** der Kolbenstangen-Kanal (18) durch Bestrahlen des Kolbenkörpers (16) mittels eines Laserstrahls eingebracht wird.

2. Verfahren nach Anspruch 1, **dadurch gekennzeichnet, dass** es sich bei dem Kolbenkörper (16) um ein Kunststoff-Bauteil handelt.

3. Verfahren nach einem der vorhergehenden Ansprüche, **dadurch gekennzeichnet, dass** das Überströmloch (17) nach dessen Herstellung vermessen wird, wobei vorzugsweise der Kanaldurchmesser des Überströmlochs (17) gemessen wird.

4. Verfahren nach Anspruch 3, **dadurch gekennzeichnet, dass** der Dämpferkolben (14) nach dem Vermessen des Überströmlochs (17) in Abhängigkeit des Messergebnisses, insbesondere dem gemessenen Ist-Wert des Lochdurchmessers, nach Chargen sortiert wird und/oder bei zu großer Abweichung des Messergebnisses von einem Sollwert eine Nachbearbeitung des Überströmloches (17) insbesondere mittels Bestrahlen durch Laser stattfindet.

5. Verfahren nach einem der vorhergehenden Ansprüche, **dadurch gekennzeichnet, dass** zur Durchführung des Verfahrens eine Bearbeitungseinrichtung (11) mit mehreren Bearbeitungsstationen verwendet wird, wobei von den Bearbeitungsstationen eine Zuführstation (22) zur Zuführung von unbearbeiteten Kolben-Rohlingen, eine Laserstation (26) zur Herstellung des Überströmlochs (17), eine Messstation (27) zur Vermessung des hergestellten Überströmlochs (17) und eine Ausschleusstation (28) zur Ausschleusung der vermessenen Dämpferkolben (14) vorgesehen sind.

6. Verfahren nach Anspruch 5, **dadurch gekennzeichnet, dass** die Bearbeitungseinrichtung (11) eine Fördereinrichtung (24) aufweist, die zum Transport der Dämpferkolben (14) zwischen den Bearbeitungsstationen verwendet wird.

7. Verfahren nach Anspruch 6, **dadurch gekennzeichnet, dass** es sich bei der Fördereinrichtung (24) um einen allen Bearbeitungsstationen zugeordneten Drehteller (25) handelt, der die darauf befindlichen Dämpferkolben (14) taktweise zwischen den Bearbeitungsstationen bewegt.

8. Hydraulischer Dämpfer, mit einem Dämpfergehäuse (13) und einem im Dämpfergehäuse (13) aufgenommenen, mit einer Kolbenstange (15) verbunden Dämpferkolben (14) wobei der Dämpferkolben (14) einen Kolbenkörper (16) aufweist, der axial von wenigstens einem Überströmloch (17) durchsetzt ist, über den beim Dämpfungsvorgang Dämpfungsflüssigkeit überströmen kann, wobei das Überströmloch (17) durch Bestrahlen des Kolbenkörpers (16) mittels eines Laserstrahls ausgebildet ist, **dadurch gekennzeichnet, dass** das Überströmloch (17) zwei einander entgegengesetzt angeordnete Mündungsabschnitte aufweist, die über einen Zentralabschnitt miteinander verbunden sind, wobei die Mündungsabschnitte gegenüber dem Zentralabschnitt trichterförmig erweitert sind.

9. Bewegungseinrichtung zum Öffnen und Schließen eines bewegbaren Möbelteils, insbesondere Schublade, Tür oder Klappe **gekennzeichnet durch** wenigstens einen hydraulischen Dämpfer (12) gemäß Anspruch 8.

10. Bewegungsvorrichtung nach Anspruch 9, **dadurch gekennzeichnet, dass** die Bewegungseinrichtung (11) als Beschlag, insbesondere Klappenbeschlag, ausgebildet ist, mit einer Hebeleinrichtung mit mehreren gelenkig miteinander verbundenen Hebeln, die einerseits schwenkbeweglich am Möbel und andererseits schwenkbeweglich an einem bewegbaren Möbelteil gelagert sind, wobei vorzugsweise der hydraulische Dämpfer (12) an einer zum Beschlag gehörenden Montageplatte angeordnet ist, die ihrerseits am Möbel befestigbar ist.

11. Bewegungsvorrichtung nach Anspruch 9,
**dadurch gekennzeichnet, dass** die Bewegungseinrichtung (11) als Scharnier ausgebildet ist, mit einem einem Möbel zugeordneten ersten Scharnierteil, insbesondere in Form eines Scharnierarms, und einem einem bewegbaren Möbelteil, beispielsweise Tür, zugeordneten zweiten Scharnierteil, insbesondere in Form eines Scharniertopfes, wobei vorzugsweise der hydraulische Dämpfer am möbelseitigen ersten Scharnierteil angeordnet ist.

## Claims

1. Method for producing a hydraulic damper (12) which has a damper housing (13) and a damper piston (14) accommodated in the damper housing (13) and connected to a piston rod (15), wherein the damper piston (14) has a piston body (16) which is axially penetrated by at least one overflow hole (17) through which damping fluid can overflow during the damping process, the overflow hole (17) is produced by irradiating the piston body (16) using a laser beam, wherein the piston body (16) has a piston rod channel (18) in which the piston rod (15) is accommodated, **characterised in that** the piston rod channel (18) is produced by irradiating the piston body (16) using a laser beam.

2. Method according to claim 1, **characterised in that** the piston body (16) is a plastic component.

3. Method according to one of the preceding claims, **characterised in that** the overflow hole (17) is measured after its production, wherein preferably the channel diameter of the overflow hole (17) is measured.

4. Method according to claim 3, **characterised in that** the damper piston (14) is sorted into batches after the overflow hole (17) has been measured depending on the measurement result, in particular the measured actual value of the hole diameter, and/or if the deviation of the measurement result from a target value is too great, the overflow hole (17) is reworked, in particular by means of laser irradiation.

5. Method according to one of the preceding claims, **characterised in that** a processing device (11) with several processing stations is used to carry out the method, wherein of the processing stations a feed station (22) for feeding unprocessed piston blanks, a laser station (26) for producing the overflow hole (17), a measuring station (27) for measuring the produced overflow hole (17) and an ejection station (28) for ejecting the measured damper pistons (14) are provided.

6. Method according to claim 5, **characterised in that** the processing device (11) has a conveyor device (24) which is used to transport the damper pistons (14) between the processing stations.

7. Method according to claim 6, **characterised in that** the conveyor device (24) is a rotary plate (25) assigned to all processing stations, which moves the damper pistons (14) located thereon in cycles between the processing stations.

8. Hydraulic damper, with a damper housing (13) and a damper piston (14) accommodated in the damper housing (13) and connected to a piston rod (15), wherein the damper piston (14) has a piston body (16) which is axially penetrated by at least one overflow hole (17) through which damping fluid can overflow during the damping process, wherein the overflow hole (17) is produced by irradiating the piston body (16) by means of a laser beam, **characterised in that** the overflow hole (17) has two mouth sections arranged opposite one another which are connected to one another via a central section, wherein the mouth sections are widened in a funnel shape relative to the central section.

9. Movement device for opening and closing a movable furniture part, in particular a drawer, door or flap, **characterised by** at least one hydraulic damper (12) according to claim 8.

10. Movement device according to claim 9, **characterised in that** the movement device (11) is designed as a fitting, in particular a flap fitting, with a lever device with several levers which are connected to one another in an articulated manner and which are pivotably mounted both on the furniture and on a movable furniture part, wherein the hydraulic damper (12) is preferably arranged on a mounting plate belonging to the fitting, which in turn can be fastened to the furniture.

11. Movement device according to claim 9, **characterised in that** the movement device (11) is designed as a hinge, with a first hinge part assigned to a piece of furniture, in particular in the form of a hinge arm, and a second hinge part assigned to a movable piece of furniture, for example a door, in particular in the form of a hinge cup, wherein the hydraulic damper is preferably arranged on the first hinge part on the furniture side.

## Revendications

1. Procédé de fabrication d'un amortisseur (12) hydraulique, qui a une enveloppe (13) d'amortisseur et un piston (14) d'amortisseur logé dans l'enveloppe (13) de l'amortisseur et assemblé à une tige (15) de piston, dans lequel le piston (14) de l'amortisseur a un corps (16) de piston, qui est traversé axialement par au moins un trou (17) de trop-plein, par lequel, lors de l'opération d'amortissement, du liquide d'amortissement peut se décharger, dans lequel on ménage le trou (17) de trop-plein en exposant le corps (16) du piston à un faisceau laser, dans lequel le corps (16) du piston a un conduit (18) de tige de piston, dans lequel la tige (15) du piston est logée, **caractérisé en ce que** l'on ménage le conduit (18) de tige de piston en exposant le corps (16) du piston à un faisceau laser.

2. Procédé suivant la revendication 1, **caractérisé en ce que** le corps (16) du piston est une pièce en matière plastique.

3. Procédé suivant l'une des revendications précédentes, **caractérisé en ce que** l'on mesure le trou (17) de trop-plein après sa fabrication, dans lequel de préférence on mesure le diamètre de conduit du trou (17) de trop-plein.

4. Procédé suivant la revendication 3, **caractérisé en ce que** l'on trie suivant les charges le piston (14) de l'amortisseur après la mesure du trou (17) de trop-plein en fonction du résultat de la mesure, en particulier de la valeur réelle mesurée du trou de trop-plein, et/ou s'il y a un écart trop grand du résultat de la mesure à une valeur de consigne, un réusinage du trou (17) de trop-plein a lieu en particulier au moyen d'une exposition à un faisceau laser.

5. Procédé suivant l'une des revendications précédentes, **caractérisé en ce que**, pour effectuer le procédé, on utilise un dispositif (11) d'usinage ayant plusieurs postes d'usinage, dans lequel on prévoit parmi les postes d'usinage un poste (22) d'amenée pour l'amenée d'ébauches de piston non usinées, un poste (26) de laser pour la fabrication du trou (17) de trop-plein, un poste (27) de mesure pour la mesure du trou (17) de trop-plein fabriqué et un poste (28) d'éjection des pistons (14) d'amortisseur mesurés.

6. Procédé suivant la revendication 5, **caractérisé en ce que** le dispositif (11) d'usinage a un dispositif (24) de transport pour le transport des pistons (14) d'amortisseur entre les postes d'usinage.

7. Procédé suivant la revendication 6, **caractérisé en ce que** le dispositif (24) de transport est un plateau (25) tournant, qui est associé à tous les postes d'usinage et qui déplace les pistons (14) d'amortisseur qui s'y trouvent en cadence entre les postes d'usinage.

8. Amortisseur hydraulique, comprenant une enveloppe (13) d'amortisseur et un piston (14) d'amortisseur logé dans l'enveloppe (13) de l'amortisseur et assemblé à une tige (15) de piston, dans lequel le piston (14) de l'amortisseur a un corps (16) de piston, qui est traversé axialement par au moins un trou (17) de trop-plein, par lequel, lors de l'opération d'amortissement, du liquide d'amortissement peut se décharger, dans lequel le trou (17) de trop-plein est constitué en exposant le corps (16) du piston à un faisceau laser, **caractérisé en ce que** le trou (17) de trop-plein a deux parties d'embouchure disposées de manière opposée l'une à l'autre, qui communiquent entre elles par une partie centrale, dans lequel les parties d'embouchure s'évasent en forme d'entonnoir par rapport à la partie centrale.

9. Dispositif de déplacement pour l'ouverture et la fermeture d'une partie mobile de meuble, en particulier d'un tiroir, d'une porte ou d'un volet, **caractérisé par** au moins un amortisseur (12) hydraulique suivant la revendication 8.

10. Dispositif de déplacement suivant la revendication 9, **caractérisé en ce que** le dispositif (11) de déplacement est constitué sous la forme d'une armature, en particulier d'une armature à volet, comprenant un dispositif de levage ayant plusieurs leviers articulés entre eux, qui d'une part sont montés mobiles en articulation sur le meuble et d'autre part mobiles en articulation sur une partie mobile du meuble, dans lequel de préférence l'amortisseur (12) hydraulique est disposé sur une plaque de montage appartenant à l'armature et qui de son côté peut être fixée au meuble.

11. Dispositif de déplacement suivant la revendication 9, **caractérisé en ce que** le dispositif (11) de déplacement est constitué en charnière avec une première partie de charnière associée à un meuble, en particulier sous la forme d'un bras de charnière, et une deuxième partie de charnière associée à une partie mobile de meuble, par exemple à une porte, en particulier sous la forme d'un pot de charnière, dans lequel de préférence l'amortisseur hydraulique est disposé sur la première partie de la charnière du côté du meuble.
